# EUROPEAN PATENT APPLICATION

(11) **EP 1 952 971 A1**
(43) Date of publication of application: **06.08.2008**
(21) Application number: 05799716.5
(22) Date of filing: 30.09.2005
(51) Int. Cl.: B29C 59/14, B29C 65/48, C09J 5/02, H05H 1/34

(54) **METHOD FOR THE SURFACE TREATMENT OF STRUCTURES THAT ARE MADE FROM A COMPOSITE MATERIAL, USING BEAMS OF ATMOSPHERIC PLASMA**

(71) Applicant: Airbus España, S.L., 28906 Getafe (Madrid) (ES)
(72) Inventor: LAZCANO UREÑA, Silvia, E-28027 Madrid (ES)
(74) Representative: Elzaburu Marquez, Alberto
(86) International application number: PCT/ES2005/070134
(87) International publication number: WO 2007/039651

(57) **Abstract**

The invention relates to a method of surface treatment of predetermined areas of a composite material structure with at least one plasma beam at atmospheric pressure, produced by a plasma generator provided with an emission nozzle in order to facilitate its adhesive bonding to another structure, in which:
a) the plasma beam emitted through the nozzle may include a reactive gas, is projected on the composite material structure from a distance comprised between 0,2 and 10 cm;
b) the plasma beam is projected on the composite material structure with an angle of incidence comprised between 75° and 105°.

It is preferably applied to carbon fiber or fiberglass and epoxy resin or bismaleimide resin structures.

Other relevant variables in the process are the plasma beam power and the treatment rate.

## Description

### FIELD OF THE INVENTION

The invention relates to a method of surface treatment of composite surfaces with atmospheric plasma beams, particularly to facilitate their adhesive bonding to another composite material surface or another substrate.

### BACKGROUND OF THE INVENTION

The design of adhesive bonds is currently a field of growing interest within the aeronautical industry, especially in the case of structures manufactured with carbon fiber composite materials. The number and structural importance of adhesive bonds progressively grow over the years, and in most cases, the strength of the structures is determined by the strength of their bonds.

Adhesive bonds have numerous advantages with respect to traditional mechanical bonds (riveted or screwed): these bonds do not require drilling of the structure, they distribute the stresses over a greater area than mechanical bonds, and add less weight and have greater strength to fatigue.

The result obtained upon carrying out an adhesive bond is determined by the type of interaction between the phases in contact. Said interaction occurs by means of several adhesion mechanisms: chemical bond formation in the interface, mechanical cross-linking, electrostatic adhesion, macromolecule diffusion and adsorption or wetting.

When conducting mechanical tests on adhesive bonds, bond energies several times higher than the theoretical bond energies obtained by means of calculation methods are obtained. This is due to the fact that the mechanical stress applied on the adhesive bond causes a substantial local distortion of the phases, and in case the materials are dissipative materials, a considerable consumption of energy occurs in the regions close to the failure due to the viscoelastic or plastic deformations. This synergy between the energy required breaking the interfacial bonds and the energy required to deform solids manages to increase the strength of the adhesive bond.

But all the advantages that adhesive bonds have are conditioned by a series of factors affecting their efficiency: the surface treatment prior to bonding of the substrates, the bond service temperature, the residual thermal stresses that are generated due to the differences in the thermal expansion coefficients between the adhesive and the adherents, and the geometry of the bond. Likewise, it must be taken into account that the durability of the interfacial adhesion of an adhesive bond structure subjected to the action of external agents is critical due to the effects caused by high moisture levels, temperature fluctuations and ultraviolet radiation incidence.

Once the design of the adhesive bond is optimized, taking geometric and thermal factors into account, the surface preparation of the substrates prior to their bonding is perhaps the most determinant factor in the final efficiency and durability of the bond.

Polymeric surfaces are usually difficult to wet and bond due to the fact that they have low levels of surface energy, they may be incompatible with the adhesives or even chemically inert, or simply be coated with weak boundary layers or contaminants.

The number of factors involved in the final efficiency of adhesive bonds between polymeric materials makes it very difficult to find systems of assuring their quality. The intervention of so many variables in the adhesion phenomenon in some cases makes achieving stability and repeatability in the result obtained in an adhesive bond complicated. This is why on many occasions the control of bonded joints requires complex and expensive tests that are used to assure the final quality. Obtaining a reliable and repetitive bonding process allows reducing or eliminating these tests, assuring the final quality with a substantial decrease in production costs.

The surface preparation of the substrates is one of the phases of the bonding process that determines to a large extent the final result obtained from the bond, and therefore the optimization of this phase conditions the assurance of the obtained quality. This is why different surface treatments have been developed throughout history to improve the adherence of polymeric substrates. All these treatments have the purpose of improving the final efficiency of the adhesive bond and being able to assure the invariability of the obtained results. The most common among the developed treatments are those related with the use of oxidizing chemical agents, the use of various physicochemical methods, and finally the introduction of functional groups on the surface of the substrates.

All these treatments are widely developed in innumerable industrial applications, but many of them have certain drawbacks:
- Chemical Methods: the use of organic solvents such as methylethyl ketone (MEK), isopropyl alcohol (IPA), acetone or toluene in cleaning and surface preparation processes presents risks of inflammability as well as safety and hygiene problems for operators.
- Physical Methods: mechanical abrasion systems (sanding, sandblasting, etc.) must be preceded by cleaning and degreasing treatments. These processes generate waste, which must subsequently be removed so that it does not contaminate the surface to be bonded. Furthermore, in the event that the abrasion is excessive, the topography of the treated surface may be seriously damaged, reducing the contact surface, affecting the mechanical cross-linking, and in short weakening the adhesive bond.
- Physicochemical Methods: physicochemical treatments (flame, crown, oxidizing chemicals, etc.) remarkably increase the wettability and adhesion of the polymeric substrates due to the fact that they introduce oxygenated groups (carbonyl, hydroxyl and carboxyl) on the treated polymeric surfaces. All these methods are wide spread in the polymer processing industry, but their main drawback lays in the lack of stability of the treated surfaces. The improvement in the adhesive characteristics obtained by means of these treatments gradually degrades over time, so the final features of the adhesive bond will depend on the degradation of the pretreated substrates. This degradation basically has two causes: the reorientation and migration of the oxygenated functional groups towards the interior of the polymer during its storage, and the partial loss of lower molecular weight species. Another drawback of this type of treatments is that they cause molecular division processes. The splitting gives rise to low molecular weight surface species generating new interfaces that may be very sensitive to environmental conditions and their degradation may affect, causing a decrease of both the properties of the adhesive bond and its long-term durability.

To overcome the drawbacks derived from the degradation and loss of properties of all these surface treatments, methods are known for the improvement of the adhesion of polymeric substrates by means of systems that are applied in two phases:
1.- Surface activation by means of physical or physicochemical methods.
2.- The application of a chemical compound interacting with the surface species, protecting the activation and acting as an adhesion promoter.

The main drawbacks of all these methods are the complication due to the addition of steps to the treatment process and the specificity of the chemical used as an adhesion promoter, which must be suitable for each chemical nature of the substrate.

Surface treatments by means of laser require expensive and complex equipment, and their efficiency is reduced due to the small area which laser beams are capable of covering and the problems derived from thermal degradation of the treated surfaces.

Ultraviolet radiation treatments are an interesting alternative for polymeric surface treatment. UV irradiation may be applied independently or together with oxygen or ozone. The main drawback of this type of treatments is that they require a prior cleaning process with organic solvents, with the resulting increase of cost of the treatment and safety and hygiene problems.

Treatments by means of plasma substantially improve the adhesion of polymeric substrates, achieving the desired levels of surface activation and wettability. Adhesive bonds with a strength four times greater than that achieved by those treated by means of abrasive methods are obtained with this type of treatments.

The increase of the levels of surface energy and wettability can be enhanced by means of the use of plasma systems combined with the addition of a gas, a mixture of gases or a monomer selectively incorporating different types of chemical species to the polymeric surface, under controlled process conditions.

Conventional plasma systems have a great drawback, which is that the plasma is generated at a low pressure, so the dimensions of the elements to be treated are limited by the size of the pressurized chamber. The appearance of equipment capable of generating plasma at atmospheric pressure eliminates the dimensional drawbacks and considerably broadens the field of application of this type of treatments, making them susceptible to being automated and installed in a mass production system. This system is simple, does not require auxiliary operations, activates the treated surfaces while eliminating contaminants, and does not appreciably degrade for reasonable storage times.

Among the known art concerning atmospheric plasma that described in the following patents must be indicated:
- US Patent number 5,185,132, "Atmospheric plasma reaction and apparatus therefor". This patent describes an atmospheric plasma generation method by introducing a gas or mixture between a noble gas and a reactive gas in a vessel in which they react under the action of electrodes coated with a dielectric material. The configuration and operation of an atmospheric plasma generator is also disclosed.
- U.S. Patent number 5,928,527. "Surface modification using atmospheric pressure glow discharge plasma source." In this patent, a method of surface modification by using an atmospheric plasma generated from a radio frequency signal is described. Said plasma is generated from oxygen or the mixture of oxygen and an inert gas at a temperature below 100°C. Throughout this patent, applications of this surface modification method which affect a great diversity of materials (semiconductors, polymers, composite materials,...etc.) and industrial applications (organic contaminant cleaning, paint stripping, localized attack during the manufacturing and assembly of components in microelectronics, surgical equipment sterilization, modification of composite materials prior to their adhesive bonding,...etc.) are listed without detailing nor determining parameters and conditions of use.
- JP 2005005579 "Atmospheric plasma processing apparatus for stable transportation of works and prevention of electromagnetic wave leakage". It describes the equipment for continuous treatment with atmospheric plasma, as well as its corresponding electromagnetic protections to prevent leakage.

Different direct applications of atmospheric plasma as a method for activating a surface, prior to the application of a chemical product acting as an adhesion promoter, are likewise known, such as those described in the following patents:
- US6800331. "Preparation of a functional polymeric surface."
- W00216051. "Surface cleaning and modification processes, methods and apparatus using physicochemically modified dense fluid sprays."
- US5425832. "Process for a surface treatment of a glass fabric."

Currently, the aeronautical industry shows a marked tendency to incorporate primary structures manufactured with composite materials. The composite materials mainly used in manufacturing aeronautical structures are made up of a polymeric matrix reinforced with fibers (carbon, glass, aramide). The structures manufactured with this type of materials substantially reduce the final weight of the airplane and consequently its fuel consumption. In general, they are structures in which a base element in the form of a solid laminate is superficially reinforced with stiffeners. In most cases, said stiffeners are joined to the laminate by means of adhesive bonds. Given the enormous structural importance of these bonds, their previous surface preparation becomes particularly important.

In this industry, quality assurance becomes particularly important for obvious safety reasons. That is why the use of processes that gives rise to satisfactory and repetitive results and ensure the final output of the manufactured components is sought. Reliability and repeatability of the surface treatment determine the final properties of the bonded structure.

In the field of the aeronautical industry, surface preparation prior to the adhesive bonding of components manufactured with polymeric matrix composite materials has traditionally been carried out by means of two systems:
1.- Mechanical abrasion (sanding) + cleaning with organic solvents (MEK or IPA). The main drawback of this method lays in that it is usually carried out by hand, which causes its limited repetitiveness and its great dependence of the operator's treatment conditions.
2.-Use of peelable fabrics + cleaning with organic solvents. Peelable fabrics are fabrics of polymeric fibers (polyesters, polyamides, etc.), which are placed on the polymeric surface to be treated, protecting it from contamination and improving its surface finish. Before carrying out the adhesive bonding, the fabric is removed by peeling it from the surface where it is located, and cleaning the latter with organic solvents. The structure of the fabric generates the needed micro-roughness as a surface preparation prior to the adhesive bonding. The main drawback of this method lays in the huge amount of parameters intervening in the process and that may affect the efficiency of the adhesive bond prepared by means of this method. This large number of factors that may alter the efficiency of the process causes it to require constant quality controls.

Since the methods traditionally employed for the superficial preparation prior to the adhesive bonding of members manufactured with polymeric matrix composite materials reinforced with continuous fibers have certain drawbacks, it is necessary to determine a reliable, cheap, continuous, and reproducible method that may replace the aforementioned ones.

### SUMMARY OF THE INVENTION

The present invention proposes a method of surface treatment of a composite material structure with a plasma beam at atmospheric pressure, produced by a plasma generator provided with an emission nozzle, for facilitating its adhesive bonding to another composite material structure, which is characterized in that:
a) The plasma beam emitted through the nozzle may include a reactive gas, is projected on the composite material structure from a distance comprised between 0,2 and 10 cm;
b) The plasma beam is projected on the composite material structure with an angle of incidence comprised between 75° and 105°.

The use of the method object of the present invention has proven effective in the activation of polymeric substrates, increasing their surface energy and wettability. Said surface activation is greatly important when it comes to increasing the mechanical properties of adhesive bonds between members manufactured with polymeric matrix composite materials reinforced with carbon fiber. At present, a large number of aeronautical structures are manufactured by means of the adhesive bonding of components manufactured with composite materials of these characteristics, so the use of the method object of the present invention improves the general performance of these structures.

The method object of the present invention improves the adhesion of the treated polymeric substrates, as it generates superficially oxygenated active species, modifies the topography, and reduces the presence of contaminants such as fluorine or silicones, which are highly detrimental to adhesive bond efficiency. Thus, not only does it not require prior or subsequent cleaning operations with organic solvents, but also it is itself capable of removing elements that degrade the mechanical properties of the bond from the treated surface.

One advantage of the method object of the present invention is that by using plasma generators working at atmospheric pressure it allows to extend the treatment to aeronautical applications in which the structures to be treated usually have great dimensions. The possibility of generating and projecting plasma at atmospheric pressure also facilitates automation of the process and its implantation in mass production systems.

Another advantage is that treatment automation in turn allows developing systems of mass monitoring of the surface treatment process quality such as measuring the contact angles on the treated surfaces. In any case, the system ensures repetitiveness of the treatment, which facilitates the implantation of quality control systems by means of statistical sampling or even guaranteed quality systems that do not require testing during the process.

Other characteristics and advantages of the present invention will be clear from the following detailed description of an embodiment illustrative of its object in connection with the attached figures.

### BRIEF DESCRIPTION OF THE DRAWINGS

Figure 1 shows the evolution of the contact angles in a test for applying a surface treatment according to the invention of a carbon fiber and epoxy composite material with plasma by varying the speed of the mobile plate (treatment time).
Figures 2, 3 and 4 are micrographs respectively showing a composite material surface prior to being treated according to the method object of the present invention and after being treated at a rate of 5 m/min and at a rate of 1 m/min.
Figure 5 shows the evolution of the atomic percentages of O, C and the O/C ratio on the surface of a material treated according to the method object of the present invention with respect to the speed of the mobile plate.
Figure 6 shows the evolution of the atomic percentages of N, S and F on the surface of a material treated according to the method object of the present invention according to the speed of the mobile plate.

### DETAILED DESCRIPTION OF THE INVENTION

The method of surface treatment of structures of polymeric matrix composite materials reinforced with carbon fiber as a preparation prior to the adhesive bonding which is the object of the present invention is based on the adaptation of the variables which will be indicated below for optimizing the final result to be obtained according to the chemical characteristics of the polymeric matrix to be treated.

Type of atmospheric plasma generator. The method of surface treatment of composite material structures according to the present invention may be carried out using commercially available atmospheric plasma generating equipment regardless of their particular technical characteristics and the system they use to generate the plasma. This method is highly flexible as regards nozzle configuration, point nozzles may be used emitting frustoconical plasma foci and also nozzles that cover greater surfaces may be designed by aligning overlapping point sources. This last system allows greater flexibility when it comes to choosing the area to be treated, as the entirety of point sources, or only part of them to cover smaller areas, may be used. Likewise, nozzles distributing the plasma over a lineal surface may be also used, which ensures greater treatment homogeneity, or even circular nozzles capable of generating different treatment profiles. In the case of bonding aeronautical structures, the area to be treated always matches the contact surface between the stiffeners and the base skin of the element is therefore determined by the width and length of the base of the stiffener.

Distance between the nozzle and the substrate. In the method according to the invention the plasma is projected at atmospheric pressure in a frustoconical shape, so that the greater the distance is between the nozzle and the substrate, the larger the treated surface area will be. But in contrast, the greater the distance to the substrate, the less the power and effectiveness of the surface activation will be. This is why a solution must be reached which is a compromise between the dimensions of the area treated by the beam and its effectiveness, considering this distance to be comprised between 0.2 and 10 cm. The optimal distance in the case of carbon fiber composite materials is between 0.5 and 3 cm. At smaller distances heat degradation usually damages both the base material and the final properties of the bonded joint, and for greater distances treatment effectiveness is considerably reduced. Reducing the distance between the nozzle and the surface increases treatment intensity, and its linear speed may be increased. Angle of incidence of the plasma beam. In the method according to the invention it has been verified that when comprised between 75° and 105°, the angle of incidence of the plasma beam does not noticeably affect the properties of the treated surface, as long as it is applied within the established distance tolerances. This non-dependence of the angle of incidence is especially interesting when treating curved surfaces.

Power applied to generate the plasma beam. In the method according to the invention the power of the plasma beam determines the final characteristics achieved by the treatment. If excessive power is used, surface ablation may even eliminate all the microroughness, damaging the strength and durability of the adhesive bond. Likewise, excessive power may thermally degrade the surface to be treated, generating weak interfaces, which damage bond efficiency. In contrast, if the power of the plasma is not enough, the polymeric matrix base material will not reach the desired level of surface activation, therefore not reaching a noticeable improvement in the performance of its adhesive bond. In the case of carbon fiber composite materials, the optimal treatment power is between 2000 and 3000 W.

Gas or mixture of gases to be used. In the method according to the invention the surface treatment by means of atmospheric plasma may be combined with the action of one or more reactive gases, which produce a selective modification of the substrate depending on its nature and the desired degree of activation. The plasma generated in the reactor can be projected on the substrate with the aid of a compressed air system, but if the chemistry of the adherent thus requires, other reactive gases or mixtures of gases (02, N2, Ar...) may be used which enhance the action of the atmospheric plasma, introducing active species which increase the surface energy of the polymer to be activated.

Air is the appropriate reactive gas for carbon fiber and epoxy resin, fiberglass and epoxy resin or carbon fiber and bismaleimide resin composite material substrates.

Treatment rate. In the method according to the invention for treating aeronautical structures it is advisable to use process speeds of over 20 m²/h. A linear speed of 1 m/min has been observed to be optimal for carbon fiber and epoxy resin composite materials, the width of the beam being the same as the surface to be treated. This speed produces the desired ablation and composition and is fast enough for the mass production of large elements to be used in their subsequent assembly in aeronautical structure assemblies.

Treated surface. The area to be treated depends both on the linear speed of the treatment and on the surface which the nozzle discharging the plasma is capable of covering. The objective of this treatment is its application on large elements the areas to be treated of which are essentially strips of variable width, normally comprised between 25 and 400 mm.
- Automations. The method object of the present invention is susceptible of being automated and integrated as another phase in the production process currently in use. Two different alternatives are set forth for automating this process:
   a) Installing the plasma head on a robot capable of shifting over the part to be treated and selectively applying the treatment. This type of automation is the desirable one in the case of large parts such as in the case of liners or spars. The automation can be programmed to apply the treatment exclusively on the areas on which the adhesive will subsequently be applied with the use of numerical control systems. The versatility of this system allows programming the individualized treatment of a vast number of elements taking into account only the positioning thereof with respect to reference marks.
   b) Installing the plasma head on a fixed support and shifting the parts on a motorized bench with movement in the directions of the three axes and with rotation possibilities. In the case that the technical complexity of the atmospheric plasma head complicates installation thereof on automation, this may be installed on a fixed support. In this case the part would be the one that would move in order to complete the scanning sequence on the surfaces to be treated.
- Process control. Total automation of the treatment allows implementing mass surface preparation process quality monitoring systems such as measuring contact angles on the treated parts. In any case, the system assures repeatability of the treatment, which facilitates implementing quality control systems by statistical sampling, or even assured quality systems which do not require testing during the process. In this case automated systems can be implemented which determine the contact angle on the treated surface.

The results of some tests carried out applying the method object of the present invention are described below.

### Test 1

A carbon fiber and epoxy resin composite material panel (panel 977-2) was subjected to treatment varying the mobile plate speed (from 1 m/min to 10 m/min) and with the values of other process variables indicated below:
- Power of the plasma beam: 2362 W
- Mobile plate-beam distance: 0.75 cm
- Number of consecutive treatments: 1

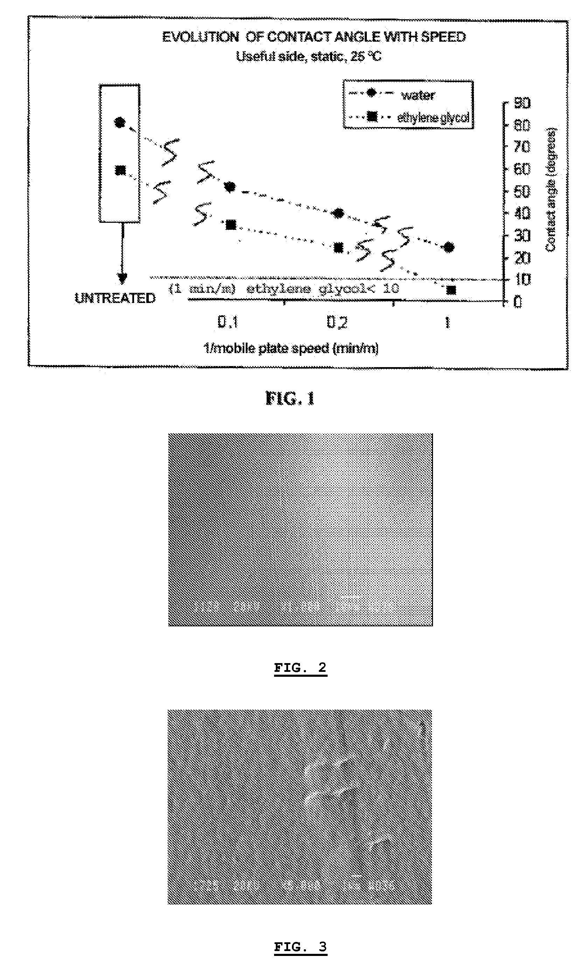

Figure 1 shows the evolution of the static contact angles measured with different standard liquids when varying the mobile plate speed. As the mobile plate speed decreases (increase in treatment time) the contact angle is smaller and wetting increases (the contact angle decreases).

The contact angle is an important indicator since an essential condition for an adhesive bond to be effective is that there is intimate contact between the adherent and the adhesive and to that end the adhesive must wet the entire surface of the adherent. This wetting capacity or wettability is quantified by means of the surface energy (σₛᵥ), which varies according to the contact angle. The contact angle refers to the angle formed by the surface of the adhesive when brought into contact with the adherent. The value of the contact angle depends mainly on the ratio existing between the adhesive forces between the adhesive and the adherent and the cohesive forces of the adhesive. When the adhesive forces are very large with respect to the cohesive forces, the contact angle is less than 90 degrees, having as a result that the adhesive wets the surface of the adherent. The smaller the contact angle (better wetting) the greater the surface energy will be and the more intimate the adhesive-adherent contact, thus obtaining a more effective adhesive bond.

Figures 2-4 show that when increasing mobile plate speed, i.e. when decreasing beam treatment time, a slight stripping of the treated surface occurs (elimination of surface material), whereas the surface exposed for a longer time (lower mobile plate speed) is less rough. This behavior is attributed to the surface ablation produced by the plasma beam treatment, such that when mobile plate speed is reduced and the treatment is more aggressive, greater stripping occurs leaving less rough composite material surfaces.

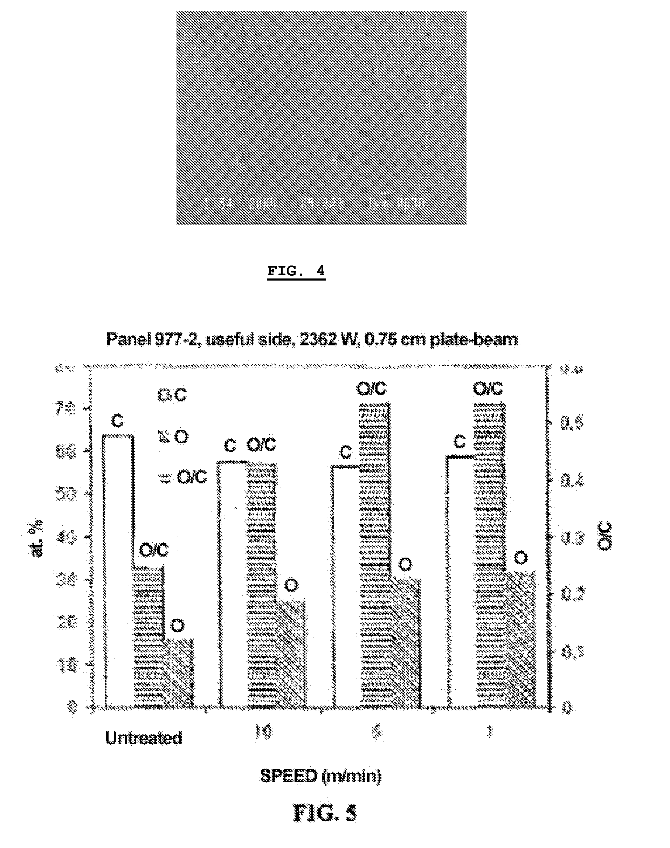

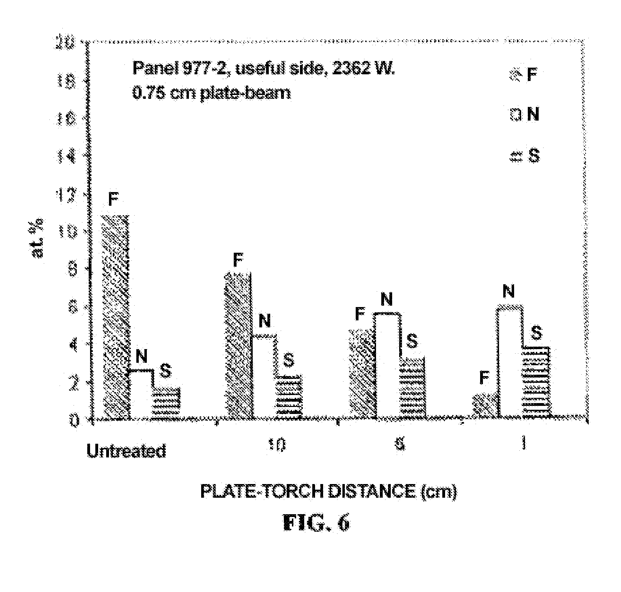

Figure 5 shows that as the mobile plate speed decreases (treatment rate increases) the atomic percentage of oxygen as well as the O/C ratio increases, both on the surface of the material, favoring adherence thereof. Likewise, it can be seen in Figure 6 that the atomic percentages of N and S of the first atomic layers increase the smaller the mobile plate speed is, which indicates that the treatment depth increases. The continuous reduction of the atomic percentage of F as the mobile plate speed decreases must also be stressed. The presence of F is detrimental to the bonded joint and it is due to the demolding agents used.

Surfaces with low surface energy are usually apolar. The formation of oxygenated groups on the surface of the material increases polarity on the surface, favoring intrinsic adhesion since "new" Van der Waals forces occur (which are directly associated to the intimate contact of the surfaces to be joined), and hydrogen bridges (which are strong enough bonds to allow bonded joints for structural demands), such that the more polar the surface (the greater the O/C ratio) the greater the surface energy will be and the more effective the adhesive bond.

### Test 2

A composite material panel was subjected to treatment varying the treatment distance and with the values of other process variables indicated below:
- Plasma beam power: 2200 W
- Treatment rate (1 m/min)

The object has been to evaluate treatment durability as well as by the aforementioned element variation, by means of bonding line tenacity, obtaining the following results.

| TREATMENT DISTANCE | DAYS SINCE TREATMENT | RESULTS G₁₀ (J/m²) |
|---|---|---|
| Untreated | | 250 |
| 0.75 cm | 2 | 813 |
| | 15 | 871 |
| 1 cm | 2 | 800 |
| | 15 | 849 |
| | 25 | 802 |

The failure mode of the elements treated by means of plasma beams is by cohesion, i.e. the break takes place in the adhesive film. On the other hand, in the untreated elements the failure mode is by adhesion, i.e. the break takes place in the composite material-adhesive interface. These data indicate that the surface obtained by plasma beam in composite materials does not undergo degradation in at least 25 days from treatment.

This type of tests demonstrate that the properties of the activated polymeric surface do not degrade within the normal workshop lifetimes of the parts before proceeding to their bonding, therefore the introduction of this process makes the production sequence more flexible with respect to surface preparation methods which are more sensitive to atmospheric degradation.

Modifications may be introduced in the preferred embodiment just set forth, which are comprised within the scope defined by the following claims.

## Claims

1. A method of surface treatment of predetermined areas of a composite material structure with at least one plasma beam at atmospheric pressure, produced by a plasma generator provided with an emission nozzle, in order to facilitate its adhesive bonding to another structure, **characterized in that**:
a) the plasma beam emitted through the nozzle may include a reactive gas, is projected on the composite material structure from a distance comprised between 0,2 and 10 cm;
b) the plasma beam is projected on the composite material structure with an angle of incidence comprised between 75° and 105°.

2. A method of surface treatment of predetermined areas of a composite material structure according to claim 1, **characterized in that** the plasma beam includes at least one reactive gas.

3. A method of surface treatment of predetermined areas of a composite material structure according to claim 2, **characterized in that** the composite material structure includes carbon fiber and epoxy resin and the reactive gas is air.

4. A method of surface treatment of predetermined areas of a composite material structure according to claim 2, **characterized in that** the composite material structure includes carbon fiber and bismaleimide resin and the reactive gas is air.

5. A method of surface treatment of predetermined areas of a composite material structure according to any of claims 3 or 4, **characterized in that** the plasma beam emitted by the nozzle is projected at a distance comprised between 0.5 and 3 cm.

6. A method of surface treatment of predetermined areas of a composite material structure according to any of claims 3 or 4, **characterized in that** the treatment rate is comprised between 0.8 and 2 m/min.

7. A method of surface treatment of predetermined areas of a composite material structure according to any of claims 3 or 4, **characterized in that** the plasma beam is projected with a power comprised between 2000 and 3000 W.

8. A method of surface treatment of predetermined areas of a composite material structure according to claim 2, **characterized in that** the composite material structure includes fiberglass and epoxy resin and the reactive gas is air.

9. A method of surface treatment of predetermined areas of a composite material structure according to any of claims 1-8, **characterized in that** the plasma beam is projected onto an immobile composite material structure with a mobile plasma generator.

10. A method of surface treatment of predetermined areas of a composite material structure according to any of claims 1-8, **characterized in that** the plasma beam is projected by means of a fixed plasma generator onto a mobile composite material structure.

11. A method of surface treatment of predetermined areas of a composite material structure according to any of claims 9-10, **characterized in that** it uses automated means to control relative shifts between the plasma generator and the composite material structure and the angle of incidence between the plasma beam and the composite material structure in its different parts.

12. A method of surface treatment of predetermined areas of a composite material structure according to any of the previous claims, **characterized in that** a plasma beam having a suitable shape is used in order to assure treatment homogeneity.
